# FASCICULE DE BREVET EUROPEEN

(11) **EP 2 011 329 B1**
(45) Date de publication et mention de la délivrance du brevet: **23.01.2019**
(21) Numéro de dépôt: 07731877.2
(22) Date de dépôt: 05.04.2007
(51) Int. Cl.: H04N 5/232, H04N 5/235, H04N 5/357, H04N 9/04, H04N 9/73

(54) **PROCÉDÉ DE TRAITEMENT D'UN PHÉNOMÈNE D'ÉCLAIREMENT RELATIF SUR UNE IMAGE NUMÉRIQUE ET SYSTÈME DE TRAITEMENT ASSOCIÉ**
VERFAHREN ZUM VERARBEITEN EINES RELATIVBELEUCHTUNGSPHÄNOMENS AN EINEM DIGITALBILD UND ASSOZIIERTES VERARBEITUNGSSYSTEM
METHOD OF PROCESSING A RELATIVE ILLUMINATION PHENOMENON ON A DIGITAL IMAGE AND ASSOCIATED PROCESSING SYSTEM

(30) Priorité: 06.04.2006 FR 0651242
(43) Date de publication de la demande: 07.01.2009
(73) Titulaire: DxO Labs, 92100 Boulogne Billancourt (FR)
(72) Inventeur: GUICHARD, Frédéric, 75012 Paris (FR); KRAAK, Michael, 92320 Chatillon (FR)
(74) Mandataire: Ipside
(86) Numéro de dépôt international: PCT/FR2007/051075
(87) Numéro de publication internationale: WO 2007/116186

(56) Documents cités:
- JP-A- 2003 069 889
- JP-A- 2004 247 880
- JP-A- 2005 352 789
- JP-A- 2006 054 927
- US-A- 5 805 213
- US-A- 5 818 523
- US-A1- 2003 234 864
- US-A1- 2004 041 919
- US-A1- 2005 146 733
- US-A1- 2005 185 066
- US-A1- 2006 045 512
- US-B1- 6 573 932
- US-B1- 6 831 687

## Description

### DOMAINE TECHNIQUE DE L'INVENTION

La présente invention a pour objet un procédé de traitement d'un phénomène d'éclairement relatif sur une image numérique. Elle concerne également un système de traitement d'un tel phénomène d'éclairement relatif. L'invention a essentiellement pour but de proposer une solution à un phénomène d'éclairement relatif adaptée à de nouveaux types de capteurs intervenant dans des appareils de capture d'image numérique.

Le domaine de l'invention est, d'une façon générale, celui de la photographie numérique, et plus particulièrement celui du traitement d'images appliqué aux photographies numériques. Par photographie numérique, on désigne une photo obtenue suite à l'impression d'une image numérique. D'une façon très générale, une image numérique est constituée de pixels, chaque pixel désignant une position et une portion de l'espace image, chaque pixel ayant au moins une valeur de pixels. Les images issues d'appareils photographiques, dites images photographiques, sont des images de dimension deux, au sens ou l'espace image est une portion rectangulaire d'un plan. Mais, des images, notamment issues d'observations physiques ou médicales, peuvent être de dimensions supérieures notamment trois. De même, une vidéo issue par exemple d'un caméscope, pourra être considérée comme une succession d'images de dimension deux ou comme une seule image de dimension trois: les deux premières dimensions étant, dans ce cas, les dimensions des images et la troisième représentant le numéro de l'image dans la vidéo.

Une image numérique est acquise au moyen d'un appareil de capture numérique. D'une façon très générale, un appareil de capture numérique est un appareil comportant au moins un capteur et un système optique et permettant d'obtenir une image numérique. Un capteur est un système convertissant la lumière en valeurs numériques reflétant l'intensité des couleurs de chaque point de l'image numérique. Un capteur peut notamment contenir un récepteur photosensible permettant la transformation de l'énergie photonique en énergie électrique. Dans une structure classique de capteur, ce récepteur photosensible peut être défini comme un ensemble de photosites. Les photosites peuvent notamment être associés à une couleur propre, comme par exemple dans le cas d'une structure de Bayer contenant deux photosites verts, un photosite rouge et un photosite bleu. De façon générale, un système optique est un ensemble de lentilles, de miroirs, de milieux transparents et homogènes séparés par des dioptres.

Dans le domaine de la photographie numérique, du fait de la numérisation de la chaîne de fabrication de la photo, depuis sa capture à sa restitution sur papier, il est de plus en plus fréquent de proposer des solutions de traitements d'images aptes à faire disparaître certains défauts apparents sur un grand nombre de d'images numériques acquises au moyen d'appareils de capture numérique. Par exemple, un défaut très fréquent est celui connu sous le nom de phénomène des yeux rouges. D'autres problèmes afférents à l'utilisation d'appareils photographiques existent, qu'ils soient, d'ailleurs, numériques ou non. Ainsi, par exemple, il est fréquent de rencontrer des problèmes de distorsion. D'une façon générale, un phénomène de distorsion connu est la distorsion géométrique, caractérisée comme une aberration géométrique en présence de laquelle des points objets alignés dans la scène photographiée ne forment pas des points images alignés. Cette distorsion géométrique se caractérise par une modification du grandissement de l'image en fonction de la position dans le champ. On distingue deux types de distorsions : les distorsions en barillet et les distorsions en coussinet selon que les grandissements locaux diminuent ou augmentent quand on se rapproche du bord du champ.

Un autre problème rencontré est connu sous le nom d'aberrations chromatiques latérales et longitudinales. D'une façon générale, des phénomènes d'aberrations chromatiques connus sont les aberrations chromatiques latérale et longitudinale comme étant une aberration géométrique en présence de laquelle le grandissement de l'image varie en fonction de la longueur d'onde. En présence d'aberration chromatique latérale, l'image est formée sur le même plan quelle que soit la longueur d'onde, mais sa position sur le plan dépend de la longueur d'onde. En présence d'aberration chromatique longitudinale, la position du plan de focalisation varie en fonction de la longueur d'onde, ce qui génère un flou différent en fonction de la longueur d'onde. L'aberration chromatique génère des phénomènes d'irisations colorées au voisinage des transitions de l'image. Différentes solutions ont été proposées dans l'état de la technique pour traiter ces problèmes.

Un autre problème connu dans le domaine de la photographie, et notamment de la photographie numérique, est un problème désigné par l'expression phénomène d'éclairement relatif.

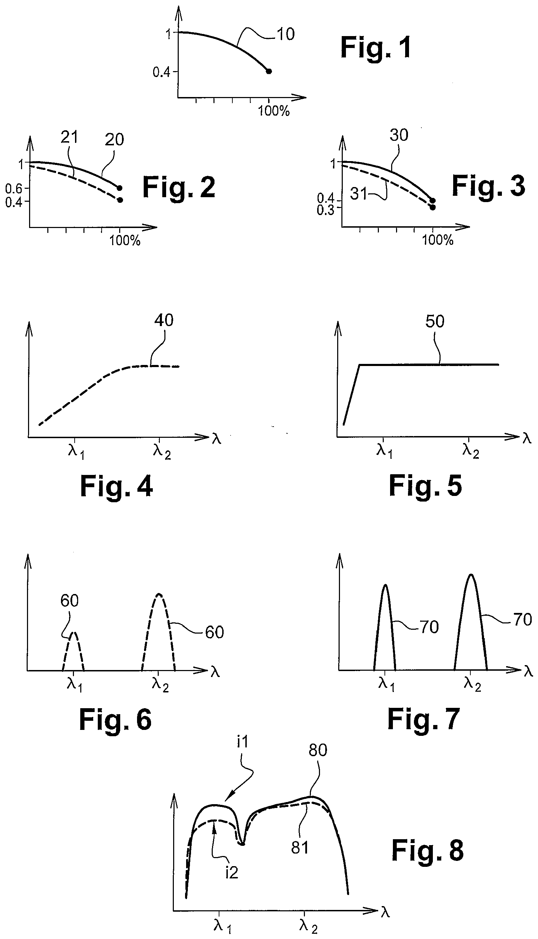

On appelle éclairement relatif le phénomène induisant sur une image numérique une variation des valeurs de pixel suivant les positions des pixels dans le champ. Par exemple, pour une image numérique d'une scène homogène, le phénomène d'éclairement relatif correspond à une variation des valeurs de pixels en fonction de leur position dans le champ. Il se manifeste par un assombrissement des coins, voir même une disparition d'information. La figure 1 montre un tel phénomène d'éclairement relatif ;sur cette figure, une courbe 10 est représentative d'un phénomène d'assombrissement, coté sur l'axe des ordonnées, en fonction d'une position dans l'image, relative à un point de référence, coté sur l'axe des abscisses.

Plusieurs sources d'éclairement relatif peuvent être identifiées pour une image issue d'un appareil :
- un objectif est caractérisé par son angle de champ, et par sa couverture de champ. Ils sont calculés pour couvrir un format de récepteur photosensible donné. L'éclairement relatif est en grande partie du à un effet de lucarne à l'intérieur de l'objectif. La totalité d'un faisceau parallèle à l'axe entrant dans l'objectif est transmis, tandis qu'un faisceau oblique sera en partie arrêté par la monture de l'objectif, pour ne plus être transmis au-delà d'un angle limite. Si l'objectif est conçu pour former un champ de pleine lumière aux dimensions de la surface photosensible pour une certaine valeur d'ouverture, il est possible qu'à pleine ouverture, la surface du récepteur dépasse celle du champ de pleine lumière, ce qui provoquera un assombrissement des coins de l'image. Il y a phénomène d'éclairement relatif quand la couverture de champ est inférieure au format de la surface sensible.
- Dans le champ couvert par un objectif, l'éclairage n'est pas rigoureusement uniforme en fonction de l'angle des rayons qui forment son image pour des simples raisons de photométrie et de géométrie. Plus l'image est loin de l'axe, plus le phénomène d'éclairement relatif est important.

- les capteurs numériques, de par leur conception, présentent une réponse variable en fonction de l'incidence des rayons qui le frappent. Plus les rayons sont inclinés, moins ils sont interprétés par le capteur, augmentant le phénomène d'éclairement relatif.
- Le phénomène d'éclairement relatif peut être provoquée par l'obstruction du faisceau image par un corps de l'appareil, ou un accessoire placé dans le champ de l'objectif. Il peut s'agir par exemple de la monture d'un filtre, ou plus souvent d'un pare-soleil inadapté.

Le phénomène d'éclairement relatif peut se mesurer sur une image issue d'un appareil en indice de lumination, la valeur d'éclairement relatif mesurant la différence en indice de lumination entre la quantité de lumière reçue par les bords de l'image numérique et celle reçu au centre de l'image numérique.

Des solutions à ce phénomène d'éclairement relatif ont été proposées dans l'état de la technique.

### ARRIERE-PLAN TECHNOLOGIQUE DE L'INVENTION

Cependant, l'apparition de nouveaux capteurs intervenant dans les appareils de capture d'images numériques donnent naissance à un nouveau problème, désigné par l'appellation d'éclairement relatif coloré. On désigne par éclairement relatif coloré, le phénomène induisant sur une image numérique une variation des valeurs de pixel suivant les positions des pixels dans le champ en fonction des canaux couleur de l'image numérique. Une image peut être décomposée de diverses façons en canaux, à un pixel de l'image correspondant alors une valeur de pixel pour chacun des canaux. Dans le cas particulier des images couleurs, la décomposition en canaux, de tels canaux étant alors dénommées canaux couleur, peut notamment se faire en utilisant une décomposition dans les espaces couleurs RGB, sRGB, LMS, Lab, Yuv, HSL, HSV, XYZ, xyz. Ces termes, à l'exception de sRGB, sont définis par exemple dans l'ouvrage suivant : "Measuring Color", Third Edition, R.W.D. Hunt, Fountain Press, Kingston-upon-Thames, England 1998, ISBN 0863433871 ou dans l'ouvrage "Color Appearance Models", M. Fairchild, Addison Wesley, 1998, ISBN 0201634643. L'espace couleur sRGB est décrit dans la norme IEC 61966-2-1 "Multimedia systems and equipment - Colour measurement and management - Part 2-1: Colour management - Default RGB colour space & sRGB". Dans le cadre de l'invention, l'image numérique pourra aussi être constituée d'un ou plusieurs canaux relatifs à d'autres données sans rapport avec la couleur ; comme par exemple des valeurs numériques relatives à des grandeurs physiques,notamment des altitudes, des distances, des températures.

Dans le cas d'une image numérique, une observation du phénomène d'éclairement relatif coloré est, par exemple, la mesure de l'éclairement relatif en indice de lumination sur chaque canal couleur. Les indices de lumination ne sont pas tous identiques dans le cas d'un phénomène d'éclairement relatif coloré. La figure 2 montre un tel phénomène d'éclairement relatif coloré ; sur cette figure, une première courbe 20, respectivement une deuxième courbe 21, est représentative d'un indice de lumination pour un premier canal couleur, respectivement pour un deuxième canal couleur, coté sur l'axe des ordonnées, en fonction d'une position dans l'image, relative à un point de référence, coté sur l'axe des abscisses. Comme on le constate, le phénomène d'éclairement relatif coloré varie d'un canal de couleur à l'autre. On a représenté ici un phénomène d'éclairement coloré variant dans une seule dimension par exemple une distance à un point. Dans une autre réalisation, ce phénomène d'éclairement coloré varie selon plusieurs dimensions de l'image.

On désigne par source de lumière, un émetteur physique d'une énergie visible. Des exemples de sources de lumière sont le ciel à différents moments de la journée, un néon fluorescent, une ampoule tungstène. Un illuminant est une représentation de la distribution spectrale d'une source de lumière. Une distribution spectrale est la représentation d'une quantité radiométrique en fonction de la longueur d'onde. Cette quantité radiométrique peut notamment être la luminance spectrale dans le cas d'une source de lumière, ou le produit de la réflectance spectrale du matériau par la distribution spectrale d'une source de lumière dans le cas d'un matériau réfléchissant la lumière, ou le produit de la transmitance d'un matériau par la distribution spectrale d'une source de lumière dans le cas d'un matériau transmettant la lumière. Des exemples d'illuminants sont : l'illuminant CIE A représentant la source de lumière qu'est un radiateur de Planck ayant une température couleur de 2856 K, l'illuminant CIE D65 qui est une représentation statistique de la lumière moyenne du jour correspondant à une température couleur d'environ 6500 K, l'illuminant CIE C, l'illuminant CIE E, les illuminants CIE D (dont l'illuminant CIE D50), les illuminants CIE F (dont CIE F2, CIE F8 ou CIE F11). Ces termes et autres exemples d'illuminants sont définis par exemple dans l'ouvrage suivant : "Measuring Color", Third Edition, R.W.D. Hunt, Fountain Press, Kingston-upon-Thames, England 1998, ISBN 0863433871 ou dans l'ouvrage suivant "Measuring Color", Third Edition, R.W.D. Hunt, Fountain Press, Kingston-upon-Thames, England 1998, ISBN 0863433871 ou ou "Color Appearance Models", M. Fairchild, Addison Wesley, 1998, ISBN 0201634643.

La figure 3 montre que le phénomène d'éclairement relatif coloré, pour un canal de couleur donné, varie pour deux illuminants différents. Sur cette figure, une première courbe 30, respectivement une deuxième courbe 31, est représentative du phénomène d'éclairement relatif pour un premier type d'illuminant, respectivement pour un deuxième type d'illuminant, coté sur l'axe des ordonnées, en fonction d'une position dans l'image, relative à un point de référence, coté sur l'axe des abscisses. Comme on le constate, le phénomène d'éclairement relatif coloré varie d'un canal de couleur à l'autre. On a représenté ici un phénomène d'éclairement coloré variant dans une seule dimension par exemple une distance à un point. Dans une autre réalisation, ce phénomène d'éclairement coloré varie selon plusieurs dimensions de l'image.

Un illuminant donné est associé à une distribution spectrale de la source de lumière en fonction de la longueur d'onde, comme illustré aux figures 4 et 5, qui montrent respectivement une première courbe 40 donnant la distribution spectrale d'un premier illuminant, et une deuxième courbe 50, donnant la distribution spectrale d'un deuxième illuminant.

La quantité d'énergie photonique de la lumière incidente sur le capteur numérique peut varier selon les illuminants, comme illustré aux figures 6 et 7, qui montrent respectivement :
- une première courbe 60 donnant les amplitudes des signaux transmis à deux longueurs d'onde différentes pour un premier illuminant, sous le même angle d'incidence, pour un capteur donné.
- une deuxième courbe 70 donnant les amplitudes des signaux transmis à deux longueurs d'onde différentes, les mêmes que celles présentes dans la figure 6, pour un deuxième illuminant, sous le même angle d'incidence, et pour le même capteur donné.

La quantité d'énergie photonique fonction de la longueur d'onde peut être modifiée en fonction des caractéristiques du système optique comme la présence de filtres pouvant modifier l'énergie transmise en fonction de la longueur d'onde de la lumière incidente sur le filtre.

Un capteur numérique a une réponse spectrale : l'amplitude des valeurs numériques reflétant l'intensité des canaux couleurs de chaque point de l'image numérique est fonction de la longueur d'onde de la lumière incidente sur le capteur. L'angle d'incidence de la lumière sur le capteur est notamment dépendant des caractéristiques du système optique telles qu'une optique autorisant des aberrations chromatiques élevées ou encore la valeur de l'angle du rayon moyen, c'est à dire l'angle entre l'axe optique du système optique et le rayon passant par le sommet de l'objet et le centre de la pupille.

Un capteur numérique n'émet pas la même réponse sur chaque partie du récepteur photosensible en fonction de l'angle d'incidence des rayons qui le frappent, comme illustré à la figure 8 ;cette figure montre une première courbe 80 et une deuxième courbe 81 qui correspondent respectivement à une première réponse spectrale d'un capteur donné pour un premier angle d'incidence i1, et à une deuxième réponse donnée par le même capteur pour un deuxième angle d'incidence i2.

Les raisons d'un tel phénomène peuvent être :
- des asymétries dans la constitution physique du capteur : photosites ayant des angles d'implantations différents sur le capteur,
- des microlentilles différentes selon les photosites, les microlentilles étant des systèmes optiques destinés à focaliser les rayons incident sur le capteur numérique vers les récepteurs photosensibles que sont les photosites pour en améliorer le rendement
- des câblages différents selon les photosites,
- une géométrie en 3 dimensions différente selon les photosites par exemple due à la présence de transistors ou de connections non symétriques
- des implantations physiques différentes dans le champ,
- une géométrie différente de photosites adjacents,
- Les caractéristiques d'un filtre IR, c'est à dire un filtre laissant plus particulièrement passer la lumière dont la longueur d'onde est comprise entre par exemple 425 et 675 nm. En fonction de l'orientation des rayons, les propriétés de transmitance du filtre peuvent varier de quelques dizaines de nm, induisant au niveau de la couleur un comportement différent au coin et au centre de l'image.
- des orientations différentes selon la couleur des photosites.

Plus l'angle est important, plus il est possible que les rayons incidents ne frappent pas la zone la plus sensible du capteur, ou soient arrêtés, par exemple, par des boucliers opaques qui couvrent des registres de transfert. D'une manière générale, la réponse du capteur peut décroître quand l'angle d'incidence augmente. L'image d'un point n'est pas formée par un rayon, mais par un faisceau de rayons dont l'incidence est comprise entre deux valeurs limites. Les nombreuses incidences qui le composent vont être interprétées différemment par le capteur, c'est à dire que l'énergie de la lumière incidente sur les récepteurs photosensibles ne va pas être la même pour toutes les longueurs d'onde, et ce, même pour des photosites adjacents.

Les photosites adjacents peuvent représenter des canaux couleur différents. En chaque photosite auquel correspond au minimum une position géométrique sur le capteur et des caractéristiques physiques telles que celle décrites auparavant, l'amplitude du signal est notamment dépendante de la réponse spectrale du capteur fonction de la longueur d'onde de la lumière incidente sur le photosite et de l'angle d'incidence de cette lumière, l'énergie photonique de cette lumière dépendant de l'illuminant et des caractéristiques du système optique. Le phénomène d'éclairement relatif coloré est lié à l'illuminant et à la valeur de pixel en chaque canal couleur des pixels de l'image numérique, les valeurs de pixels dépendant de l'amplitude de signal d'un certain nombre de photosites du capteur.

L'ensemble de ces phénomènes et considérations, entraîne l'apparition d'un phénomène d'éclairement relatif, par exemple un phénomène d'éclairement relatif coloré sur les photos prises au moyen de systèmes de capture d'images numériques. La qualité des photos s'en trouve affectée.

Le document US2005/0146733 décrit un procédé de traitement d'une image numérique dans lequel plusieurs modifications sont exécutées sur l'image numérique, y compris une correction dépendante du canal de couleur sur chaque pixel de l'image.

Le document US2005/185066 décrit un appareil photographique muni d'une fonction permettant d'effectuer une opération de correction du vignettage.

Le document US2006/045512 décrit un appareil de restitution d'images permettant de corriger la température de couleur d'un illuminant.

Le document US2003/352789 décrit un procédé de traitement d'une image numérique réalisé dans un appareil de traitement externe différent de l'appareil de capture.

### DESCRIPTION GENERALE DE L'INVENTION

L'objet de l'invention propose une solution aux problèmes et inconvénients qui viennent d'être exposés. D'une façon générale, l'invention propose un procédé de traitement d'images numériques qui intervient au niveau de tout phénomène d'éclairement relatif, y compris celui d'éclairement relatif coloré. A cet effet, on propose, dans l'invention, de prendre en considération un illuminant d'une scène photographiée pour apporter des modifications appropriées à toute image numérique à traiter.

L'invention concerne donc essentiellement un procédé de traitement d'une image numérique à traiter représentative d'une scène selon la revendication 1.

Outre les caractéristiques principales qui viennent d'être mentionnées dans le paragraphe précédent, le procédé selon l'invention peut présenter une ou plusieurs caractéristiques complémentaires parmi les suivantes :
- l'étape de modification consiste notamment en une modification de la variation d'éclairement relatif dans l'image numérique et/ou la variation d'éclairement relatif d'un canal couleur à l'autre de l'image numérique,
- les paramètres de modification de l'éclairement relatif sont sélectionnés et/ou calculés ;
- la détermination de l'illuminant est fonction d'un choix utilisateur ;
- la détermination de l'illuminant est fonction de l'activation d'un flash ;
- les paramètres de modification ont été précalculés pour un nombre prédéterminé d'illuminants types ;
- les paramètres de modification sont calculés à partir de tout ou partie des paramètres de modification précalculés ;
- l'image numérique à traiter est une superposition de plusieurs canaux couleurs, les paramètres de modification étant sélectionnés et/ou calculés pour chaque canal couleur ;
- l'étape consistant à modifier le phénomène d'éclairement relatif comporte notamment l'opération consistant à réduire et/ou annuler et/ou amener en-dessous d'une première valeur seuil un écart de mesure du phénomène d'éclairement relatif dans l'image à traiter ;
- l'étape consistant à modifier le phénomène d'éclairement relatif comporte notamment l'opération consistant à réduire et/ou annuler et/ou amener, pour chaque canal couleur, en-dessous d'une deuxième valeur seuil une mesure du phénomène d'éclairement relatif dans l'image à traiter ;
- les paramètres de modification sont des valeurs de gains à appliquer à au moins un des canaux couleur ;
- la modification de l'éclairement relatif est fonction d'au moins un paramètre variable de l'appareil de capture, le paramètre variable étant notamment soit une distance focale, soit une distance de mise au point et/ou la distance estimée de la scène imagée, soit un temps d'exposition, soit un gain, soit une sensibilité, soit un niveau d'exposition, soit une ouverture utilisé par l'appareil de capture pour acquérir l'image numérique à traiter;
- au moins une des étapes de détermination de l'illuminant, ou de modification du phénomène d'éclairement relatif, ou de modification du phénomène d'éclairement relatif est réalisée dans l'appareil de capture.
- l'étape de modification de l'éclairement relatif prend en compte les caractéristiques d'un ou plusieurs filtres inclus dans le système optique et/ou le capteur faisant varier l'éclairement relatif en fonction de l'illuminant ;

La présente invention se rapporte également à un système de traitement d'images numériques selon la revendication 11. Dans un mode de réalisation particulier, le système est intégré au moins partiellement dans l'appareil de capture.

L'invention et ses différentes applications seront mieux comprises à la lecture de la description qui suit.

### DESCRIPTION DES FORMES DE REALISATION PREFEREES DE L'INVENTION

Afin de traiter tout phénomène d'éclairement relatif, le procédé selon l'invention propose deux étapes essentielles dont les différents modes de mise en oeuvre vont à présent être détaillés.

Une première étape du procédé selon l'invention consiste en la détermination d'un illuminant existant lors de la capture d'une scène visible sur une image numérique à traiter.

Dans un premier exemple de mise en oeuvre de cette étape, on utilise un algorithme d'estimation de balance des blancs.

En effet, à une source de lumière donnée correspond une distribution spectrale fonction de la longueur d'onde. Cela signifie que certaines longueurs d'ondes, donc certaines couleurs du visible, par exemples situées entre 400 et 800nm, sont plus ou moins représentées sous certaines sources de lumière. Par exemple, en éclairage tungstène, pour une température couleur faible, les quantités radiométriques des longueurs d'onde correspondant au bleu dans le domaine du visible sont peu représentées par rapport à celles associées aux longueurs d'onde du rouge, ce rapport s'inversant lorsque les températures couleur des sources de lumière augmentent. La vision humaine compense naturellement cette différence de balance entre les couleurs quelque soit l'illuminant, interprétant un mur gris comme étant gris en température couleur faible comme élevée. La compensation consiste en particulier à modifier les rapports entre les canaux couleur pour obtenir sur l'image un rendu proche de celui de la vision humaine dans un contexte connu, notamment en terme de rapport des canaux couleur. Un capteur ne compense pas automatiquement les différences de quantités radiométriques en fonction des longueurs d'onde. Ainsi, l'image d'un mur gris par un capteur sous une source de lumière de température faible, telle qu'une ampoule tungstène, sera à dominante jaune, par manque de bleu.

Lorsque l'oeil regarde une photographie, la compensation de la couleur de l'illuminant se fait en fonction des lumières du lieu ou est regardé la photographie et non pas en fonction des lumières présentes dans la scène photographiée. Aussi, il est important, dans le cadre de photographie, que la compensation soit faite avant la restitution de l'image. Dans les appareils photographiques numériques, cette compensation est faite au sein de l'appareil au moyen de traitements numérique embarqués. Un moyen de compensation des couleurs consiste en l'application d'un algorithme de balance des blancs, de façon à ce que l'image numérique présente un rendu couleur le plus proche possible de celui qu'obtiendrait la vision humaine dans le contexte de capture. La plupart des appareils de capture numérique possèdent un algorithme de détermination automatique de la balance des blancs. Un type d'implémentation d'un algorithme de balance des blancs automatique consiste à prendre en compte les proportions des canaux couleur dans les images issues du capteur, comme par exemple les rapports rouge sur vert et/ou bleu sur vert, pour déterminer des facteurs multiplicatifs à appliquer sur chacun des canaux couleur, sous forme de gains analogiques et/ou digitaux. Dans le cadre de l'invention, l'utilisation d'un algorithme de balance des blancs automatiques permet de récupérer des informations concernant l'illuminant correspondant à la source de lumière. Les informations sont utilisées pour compenser les canaux en appliquant un gain fonction de la position et/ou le canal et/ou le maximum des canaux et l'illuminant afin d'annuler les variations d'intensité et de couleur fonction de la position dans l'image provoquées par le système optique et le capteur (y compris les éléments optiques tels que filtres, microlentilles). Un exemple d'information sur l'illuminant consiste en les gains à appliquer sur chaque canal pour compenser les canaux. Un autre exemple d'informations est une matrice NxN (N étant un entier naturel représentant le nombre de canaux) impliquant N canaux des pixels et visant à modifier les variations différenciées entre N canaux dont l'éclairement relatif coloré est à modifier. Les paramètres de modification de l'éclairement relatif coloré peuvent être des données numériques formatées comme par exemple des scalaires, des tables, des polynômes, des matrices, des tables interpolées Un exemple d'informations est un polynôme pour chaque canal couleur. Les polynômes dépendent de la position dans le champ de l'image. Les polynômes peuvent être en X,Y, X et Y indiquant les coordonnées des pixels dans un espace 2D, de polynômes en R, R exprimant une distance à un point du champ pouvant être le centre géométrique de l'image ou autre, les coordonnées du centre pouvant être différentes selon les canaux. Les informations peuvent être obtenues en évaluant le polynôme en chaque pixel pour chaque canal ou en utilisant une table de valeurs donnant les valeurs pour des zones géométriques de l'image comme par exemple des valeurs tous les KX ou KY pixels, KX et KY étant pour une image 2D, un nombre de pixels différent ou égal suivant les coordonnées géométriques de l'image

Par exemple, les informations fournies par l'algorithme de balance des blancs automatique peuvent être du type niveau du bleu alpha inférieur à niveau du vert et niveau du rouge beta supérieur à niveau du vert, ce qui permet d'identifier un illuminant tungstène. De même, des informations sont du type le niveau du bleu gamma inférieur à niveau du vert et niveau du rouge delta inférieur à niveau du vert, permettent par exemple d'identifier un illuminant lumière du jour dit D65.

Dans un autre exemple de mise en oeuvre, un utilisateur d'un appareil mettant en oeuvre le procédé selon l'invention fournit une information permettant de déterminer l'identifiant. Dans un premier cas, il peut le faire sur invitation de l'appareil qu'il utilise. Par exemple, un menu affichable sur un écran LCD lui propose une liste d'illuminants standards ; dans un tel menu on peut par exemple trouver les choix suivants : tungstène, fluorescent, lumière du jour, nuageux, ombre, flash, température couleur à définir par l'utilisateur, mode automatique. D'autres illuminants sont définis par exemple dans les ouvrages "Measuring Color", Third Edition, R.W.D. Hunt, Fountain Press, Kingston-upon-Thames, England 1998, ISBN 0863433871 ou dans "Color Appearance Models", M. Fairchild, Addison Wesley, 1998, ISBN 0201634643.

L'utilisateur sélectionne alors, au moyen de touches appropriées de l'appareil qu'il manipule, un des illuminants dans la liste.

Dans un deuxième cas, l'appareil peut exploiter des informations liées à des conditions d'utilisation de l'appareil considéré ; par exemple le fait que la fonction paysage soit sélectionnée laisse penser que l'utilisateur utilise son appareil à l'extérieur, l'illuminant déterminé étant alors le daylight, ou lumière du jour

Dans un mode de mise en oeuvre avantageux, on exploite une information relative à l'utilisation d'un flash pour la capture d'une image à traiter pour déterminer l'illuminant de la scène correspondant à l'image.

Un flash est activé suite à la détermination de la quantité de lumière reçue par l'appareil de capture numérique sur un flux vidéo ou sur l'image à capturer, en prenant en compte les données de prises de vue telles que les gains analogiques, les gains digitaux, le temps d'exposition (au moyen d'un algorithme d'auto-exposition). Si la quantité de lumière est insuffisante, l'appareil de capture numérique équipé d'un flash peut déclencher le flash pour la prise de vue.

Le flash correspond à une source de lumière et donc a un illuminant dont la distribution spectrale est connue. Dans un exemple d'implémentation de l'invention, on envisage également le cas où l'estimation de l'illuminant est basée sur un calcul prenant en compte l'illuminant de la scène sans flash ainsi que l'illuminant qu'est le flash, dans par exemple le cas d'une capture d'une image dont le sujet est trop éloigné pour que le flash soit efficace.

Dans un mode particulier de mise en oeuvre, la détermination de l'illuminant est réalisée par extrapolation d'un illuminant d'images numériques acquises de manière automatique juste avant l'acquisition de l'image numérique à traiter

En effet, la plupart des appareils de capture numérique possèdent au moins deux modes de fonctionnement, à savoir, un mode pouvant être qualifié de mode « preview » et un mode « capture ». Le mode « capture » correspond à un mode dans lequel l'image est traitée par une chaîne algorithmique à résolution maximale. Pour permettre à l'utilisateur de visualiser la scène qu'il se destine à capturer, l'implémentation d'un mode « preview » lui permet d'obtenir un flux vidéo continu d'images de taille souvent inférieure à la résolution maximale pour répondre à des contraintes de temps de calcul. Ce flux vidéo est obtenu à partir d'images dites RAW sur lesquelles l'illuminant est calculé pour chaque image. Le calcul de l'illuminant est par exemple effectué aux moyens de statistiques déterminées sur les images de faible résolution, telles que des rapports entre les plans couleurs dans des zones moyennées de l'image de faible résolution, puis en utilisant par exemple un système d'accumulation de ces statistiques dans une table de calculs contenant les valeurs des rapports des couleurs pour des illuminants standards tels que tungstène, fluorescent, lumière du jour pour différentes températures, nuageux. Pour éviter de rapides changements dans les calculs d'illuminants, les illuminants calculés sur un certains nombre d'images en amont de l'image courante du flux vidéo sont pris en compte pour choisir l'illuminant de l'image courante. Le même principe est appliqué lors d'un passage du mode « preview » au mode « capture » : l'illuminant retenu pour l'image capturée peut être celui obtenu en prenant compte les illuminants d'un certains nombre d'images précédent l'image capturée. A titre d'exemple en considérant une transition d'illuminants en mode preview d'un illuminant tungstène à un illuminant lumière du jour, les informations produites par la balance des blancs automatique indiquent la nécessité d'augmenter fortement le signal sur le canal bleu en illuminant tungstène et plus modérément en mode lumière du jour. Durant un nombre d'images pré-défini, le passage d'une augmentation forte à modérée du signal sur le canal bleu se fera progressivement, par exemple en définissant plusieurs paliers moyennant l'intensité du gain à appliquer sur le canal bleu.

En comparaison, le calcul de l'illuminant sur l'image RAW est par exemple effectué aux moyens de statistiques déterminées sur l'image de résolution maximale, telles que des rapports entre les plans couleurs dans des zones moyennées de l'image de résolution maximale, puis en utilisant par exemple un système d'accumulation de ces statistiques dans une table de calculs contenant les valeurs des rapports des couleurs pour des illuminants standards tels que tungstène, fluorescent, lumière du jour pour différentes températures, nuageux.

Une étape du procédé selon l'invention consiste en la sélection et/ou le calcul de paramètres de modification d'un phénomène d'éclairement relatif en fonction de l'illuminant déterminé lors de la première étape.

Les paramètres de modification d'un phénomène d'éclairement relatif sont une modification de l'éclairement relatif coloré en chaque pixel de la valeur de pixel sur chaque canal. Une modification de l'éclairement relatif coloré consiste à appliquer un gain fonction de la position et/ou le canal et/ou le maximum des canaux et l'illuminant afin d'annuler les variations d'intensité et de couleur fonction de la position dans l'image provoquées par le système optique et le capteur (y compris les éléments optiques tels que filtres, microlentilles).

Un exemple de paramètres de modification du phénomène d'éclairement relatif coloré est un polynôme pour chaque canal couleur. Les polynômes dépendent de la position dans le champ de l'image. Les polynômes peuvent être en X,Y, X et Y indiquant les coordonnées des pixels dans un espace 2D, de polynômes en R, R exprimant une distance à un point du champ pouvant être le centre géométrique de l'image ou autre, les coordonnées du centre pouvant être différentes selon les canaux. Le gain à appliquer peut être obtenu en évaluant le polynôme en chaque pixel pour chaque canal ou en utilisant une table de valeurs donnant les valeurs pour des zones géométriques de l'image comme par exemple des valeurs tous les KX ou KY pixels, KX et KY étant pour une image 2D, un nombre de pixels différent ou égal suivant les coordonnées géométriques de l'image.

A cet effet, dans un premier mode de mise en oeuvre de cette étape complémentaire, on procède à une sélection des paramètres de modification parmi une liste de paramètres précalculés et mémorisés dans un module de mémoire accessible par le dispositif mettant en oeuvre le procédé. La liste des paramètres précalculés sont les paramètres correspondant à des illuminants types, de préférence les illuminants les plus fréquents. Dans ce premier mode de mise en oeuvre, lorsqu'un illuminant est déterminé, qu'une information relative à cet illuminant est produite, mais que l'information désignant cet illuminant n'est pas directement associée à des paramètres de modification, on sélectionne des paramètres de modification associés à un illuminant repéré par l'information la plus proche de l'information produite.

Dans un deuxième mode de mise en oeuvre, lorsqu'un illuminant est déterminé, qu'une information relative à cet illuminant est produite, mais que l'information désignant cet illuminant n'est pas directement associée à des paramètres de modification, on procède à un calcul des paramètres de modification, qui vont correspondre à l'illuminant déterminé, à partir des paramètres précalculés. Les calculs sont par exemple effectués par un mécanisme d'identification des illuminants les plus proches de l'illuminant identifié pour lesquels des paramètres de modification sont disponibles. Les illuminants les plus proches de l'illuminant identifié sont les illuminants dont les informations définissent par exemple un intervalle de dimension égale au nombre d'informations de ces illuminants incluant les informations de l'illuminant identifié Dans un exemple, on détermine les paramètres de modification de l'illuminant identifié en interpolant les paramètres de modification des illuminants les plus proches de l'illuminant identifié pour lesquels des paramètres de modification sont disponibles. L'interpolation fait par exemple intervenir une pondération permettant de donner plus d'importance à certains illuminants proches de l'illuminant identifié dans le choix des paramètres de modification.

Dans certains modes de mise en oeuvre, les paramètres de modification sont non seulement fonction de l'illuminant déterminé, mais aussi fonction d'autres paramètres, désignés comme paramètres variables ; parmi ces paramètres, on trouve notamment, pour une image numérique donnée à traiter :
- La focale du système optique, le phénomène d'éclairement relatif dépendant de l'angle des rayons formant l'image.
- L'ouverture du diaphragme d'un système optique
- La réponse des capteurs numériques
- La distance de mise au point et/ou la distance estimée de la scène imagée
- L'utilisation d'accessoires : l'utilisation d'accessoires tels que des filtres ou pare-soleils, peut provoquer un phénomène d'éclairement relatif.
- Le niveau d'exposition des images numériques peut influencer le phénomène d'éclairement relatif. Ce phénomène est provoqué par une modification propre aux logiciels de traitement intégrés aux appareils.

Une deuxième étape essentielle du procédé selon l'invention intervient après que les paramètres de modification ont été sélectionnés ou calculés. La troisième étape consiste en la modification, sur l'image numérique à traiter, du phénomène d'éclairement relatif observé.

Dans un premier mode de mise en oeuvre de cette étape, on réalise une opération consistant à réduire et/ou annuler et/ou amener en-dessous d'une première valeur seuil un écart de mesure du phénomène d'éclairement relatif dans l'image à traiter.

On utilise les paramètres de modification pour appliquer un gain en chaque pixel modifiant la valeur de pixel de chaque canal de ce pixel.

Les paramètres de modification de l'éclairement relatif coloré peuvent être estimés en chaque pixel en calculant la valeur de polynômes dépendant de la position des pixels dans le champ de l'image pour chaque canal couleur. Les polynômes peuvent être en X,Y, X et Y indiquant les coordonnées des pixels dans un espace 2D. Les gains à appliquer pour modifier l'éclairement relatif coloré en un pixel de position X1, Y1 peuvent être déterminés en chaque canal couleur en évaluant un polynôme en les coordonnées X1, Y1 ou en des coordonnées X2,Y2 correspondant par exemple au centre d'une zone géométrique incluant le pixel de coordonnées X1,Y1. Les polynômes peuvent être en R, R exprimant une distance à un point du champ pouvant être le centre géométrique de l'image ou autre, les coordonnées du centre pouvant être différentes selon les canaux. Les gains à appliquer pour modifier l'éclairement relatif coloré en un pixel éloigné d'une distance R1 d'un point du champ o1 peuvent être déterminés en chaque canal couleur en évaluant un polynôme en la distance R1 ou en une distance R2 correspondant par exemple au centre d'une zone géométrique incluant le pixel situé à la distance R1 du point du champ o1. Les gains à appliquer peuvent être déterminés en accédant aux données numériques d'une table de valeurs donnant les valeurs à sélectionner et/ou à calculer par interpolations, pour des zones géométriques de l'image comme par exemple des valeurs tous les KX ou KY pixels, KX et KY étant pour une image 2D, un nombre de pixels différent ou égal suivant les coordonnées géométriques de l'image. La modification de l'éclairement relatif coloré en un pixel peut être une application d'une matrice de dimension le nombre de canaux couleur du pixel au carré. Dans tous les exemples de modifications de l'éclairement relatif cités précédemment, il est possible d'appliquer des facteurs de pondération sur l'intensité de la modification en chaque canal couleur, comme par exemple un coefficient k1 à appliquer au gain évalué à un canal couleur c1 par notamment une des méthodes précédemment citées et un coefficient k2 à appliquer au gain évalué à un canal couleur c2 par notamment une des méthodes précédemment citées.

Dans un deuxième mode de mise en oeuvre, on réalise une opération consistant à réduire et/ou annuler et/ou amener, pour chaque canal couleur, en-dessous d'une deuxième valeur seuil une mesure du phénomène d'éclairement relatif dans l'image à traiter.

Les paramètres de modification peuvent par exemple être appliqués au capteur dans le cas de l'application possible d'un gain analogique différent par canal couleur en chaque photosite du capteur numérique lors par exemple de la transformation de l'énergie photonique en énergie électrique se traduisant par une valeur de pixel en chaque canal et chaque pixel de l'image numérique.

Les paramètres de modification peuvent également être appliqués directement sur l'image numérique en même temps que l'application des gains numériques, par exemple en multipliant en chaque pixel la valeur de pixel de chaque canal par le produit du gain numérique du canal couleur correspondant et du résultat de l'évaluation des paramètres de modification du éclairement relatif coloré en ce même canal couleur.

Une ou plusieurs des deux étapes essentielles du procédé selon l'invention, ou de l'étape complémentaire plus particulièrement décrite, peuvent être mises en oeuvre dans l'appareil de capture réalisant l'acquisition des images numériques, ou dans tout périphérique , par exemple des imprimantes perfectionnées, des ordinateurs personnels embarquant un logiciel de traitement approprié....

La présente invention concerne également tout système, composé d'un ou plusieurs appareils électroniques, un de ces appareils pouvant être par exemple l'appareil de capture réalisant l'acquisition des images numériques, comportant les différents moyens nécessaires pour mettre en oeuvre les trois étapes essentielles du procédé selon l'invention. Parmi ces moyens, on trouve par exemple des algorithmes d'estimation de balance des blancs, des algorithmes d'interprétation des algorithmes d'estimation de balance des blancs pour déterminer un illuminant, des moyens de mémorisation des paramètres de modification précalculés, des capacités de calcul, intégrées par exemple dans un microprocesseur, de paramètres de modification à partir des paramètres de modification précalculés, des algorithmes de modification de valeurs de pixels pour modifier le phénomène d'éclairement relatif.

La modification de l'éclairement relatif peut prendre en compte certaines caractéristiques des valeurs de pixel d'un pixel en chaque canal, comme par exemple des valeurs de pixels saturées, c'est à dire des valeurs de pixels égales ou proches de la valeur de pixel maximale et/ou minimale correspondant à l'amplitude maximale et/ou minimale du signal du capteur par canal couleur. Un autre exemple de caractéristique des valeurs de pixel d'un pixel en chaque canal est le résultat d'une combinaison des valeurs de pixels de tous les canaux couleur d'un pixel, comme par exemple une combinaison linéaire des valeurs de pixel de tous les canaux couleur d'un pixel. Un exemple de prise en compte des caractéristiques des valeurs de pixel d'un pixel en chaque canal est le maintien des rapports entre les valeurs de pixel pour tous les canaux couleurs en fonction de la première valeur de pixel atteignant une valeur de seuil lors de l'application du gain de modification de l'éclairement relatif aux valeurs de pixel du pixel considéré pour chaque canal couleur.

Un exemple particulier d'éclairement relatif est connu sous le nom de vignetage. Le vignetage est une opération particulière, qui peut par exemple être mise en oeuvre par les opticiens au moment du design de l'optique, et qui consiste à arrêter des rayons en bord d'une ou plusieurs lentille(s) et qui a donc pour effet d'introduire une éclairement relatif plus faible dans les coins qu'au centre.

## Revendications

1. Procédé de traitement d'une image numérique à traiter représentative d'une scène, l'image numérique à traiter étant acquise au moyen d'un appareil de capture numérique comprenant un capteur et un système optique, l'image numérique à traiter étant la superposition de plusieurs canaux couleurs, comportant les étapes suivantes :
- prédéterminer en fonction des asymétries de la constitution physique du capteur, pour un nombre prédéterminé d'illuminants types, des paramètres de modifications de l'éclairement relatif coloré de manière dépendante de la position des pixels à l'intérieur de l'image;
- déterminer l'illuminant de la scène représentée sur l'image numérique acquise à traiter;
- modifier, sur l'image numérique à traiter, au moyen des paramètres de modification, de manière dépendante de la position des pixels à l'intérieur de l'image, un éclairement relatif coloré en fonction de l'illuminant ;
le procédé étant **caractérisé**
**en ce que** la détermination de l'illuminant de la scène représentée sur l'image numérique à traiter acquise exploite une information de l'illuminant de la scène sur une ou plusieurs images numériques acquises avant l'image numérique à traiter ;
**en ce qu'**au moins une des étapes de détermination de l'illuminant, ou de modification du phénomène d'éclairement relatif est réalisée dans un appareil de traitement externe différent de l'appareil de capture ;
**en ce que** l'étape de modification de l'éclairement relatif prend en compte les caractéristiques d'un système optique présentant des aberrations chromatiques longitudinales faisant varier l'éclairement relatif en fonction de l'illuminant,
et dans lequel l'étape consistant à déterminer l'illuminant de la scène est effectuée en exploitant un résultat d'un algorithme d'estimation de balance des blancs.

2. Procédé selon la revendication précédente dans lequel l'étape de modification comprend les étapes suivantes, consistant à :
- calculer et/ou sélectionner des paramètres de modifications à partir de l'illuminant et de tout ou partie des paramètres de modifications prédéterminés, et
- modifier, sur l'image numérique à traiter, un éclairement relatif coloré en fonction des paramètres de modification ainsi calculés et/ou sélectionnés.

3. Procédé selon l'une des revendications précédentes, dans lequel la détermination de l'illuminant est fonction d'un choix utilisateur.

4. Procédé selon l'une des revendications précédentes, dans lequel la détermination de l'illuminant est fonction de l'activation d'un flash.

5. Procédé selon la revendication précédente dans lequel l'étape consistant à modifier l'éclairement relatif comporte notamment l'opération consistant à réduire et/ou annuler et/ou amener en-dessous d'une première valeur seuil un écart de mesure de l'éclairement relatif dans l'image à traiter.

6. Procédé selon l'une des revendications précédentes, selon lequel l'étape consistant à modifier l'éclairement relatif comporte notamment l'opération consistant à réduire et/ou annuler et/ou amener, pour chaque canal couleur, en-dessous d'une deuxième valeur seuil une mesure de l'éclairement relatif dans l'image à traiter.

7. Procédé selon l'une des revendications précédentes dans lequel la modification de l'éclairement relatif consiste à appliquer un gain par pixel à au moins un des canaux couleur.

8. Procédé selon l'une au moins des revendications précédentes et selon la revendication 2, selon lequel la modification de l'éclairement relatif est fonction d'au moins un paramètre variable de l'appareil de capture, le paramètre variable étant notamment soit une distance focale, soit une distance de mise au point et/ou la distance estimée de la scène imagée, soit un temps d'exposition, soit un gain, soit une sensibilité, soit un niveau d'exposition, soit une ouverture utilisé par l'appareil de capture pour acquérir l'image numérique à traiter.

9. Procédé selon l'une au moins des revendications précédentes dans lequel au moins une des étapes de détermination de l'illuminant, ou de modification du phénomène d'éclairement relatif, est réalisée dans l'appareil de capture.

10. Procédé selon l'une des revendications précédentes, dans lequel l'étape de modification de l'éclairement relatif prend en compte les caractéristiques d'un ou plusieurs filtres inclus dans le système optique et/ou le capteur faisant varier l'éclairement relatif en fonction de l'illuminant.

11. Système de traitement d'images numériques, pour traiter une image numérique représentative d'une scène, acquise au moyen d'un appareil de capture numérique comprenant notamment un capteur et un système optique, l'image numérique à traiter étant la superposition de plusieurs canaux couleurs , ledit système étant apte à mettre en oeuvre le procédé selon l'une au moins des revendications précédentes, ledit système comportant des moyens de détermination de l'illuminant de la scène représentée sur l'image numérique à traiter acquise ;des moyens de modification, sur l'image numérique à traiter, d'un éclairement relatif coloré en fonction de l'illuminant.

12. Système selon la revendication précédente **caractérisé en ce qu'**il est intégré dans l'appareil de capture.

## Patentansprüche

1. Verfahren zum Verarbeiten eines zu verarbeitenden digitalen Bilds, das eine Szene darstellt, wobei das zu verarbeitende digitale Bild mittels eines digitalen Aufnahmegeräts aufgenommen wird, das einen Sensor und ein Optiksystem umfasst, wobei das zu verarbeitende digitale Bild die Überlagerung mehrerer Farbkanäle ist, das die folgenden Schritte umfasst:
- Vorbestimmen in Abhängigkeit von den Asymmetrien der physischen Beschaffenheit des Sensors für eine vorbestimmte Anzahl von Lichtquellentypen von Änderungsparameter der relativen farbigen Beleuchtung auf eine Art, die von der Position der Pixel im Inneren des Bilds abhängig ist;
- Bestimmen der Lichtquelle der Szene, die auf dem aufgenommenen zu verarbeitenden digitalen Bild dargestellt ist;
- Ändern auf dem zu verarbeitenden digitalen Bild mittels der Änderungsparameter auf eine Art, die von der Position der Pixel im Inneren des Bilds abhängig ist, einer relativen farbigen Beleuchtung in Abhängigkeit von der Lichtquelle;
wobei das Verfahren **dadurch gekennzeichnet ist,**
**dass** das Bestimmen der Lichtquelle der auf dem aufgenommenen zu verarbeitenden digitalen Bild dargestellten Szene eine Information der Lichtquelle der Szene über ein oder mehrere digitale Bilder, die vor dem zu behandelnden digitalen Bild aufgenommen wurden, nutzt;
**dass** mindestens einer der Schritte zum Bestimmen der Lichtquelle oder Ändern der relativen Beleuchtungserscheinung in einem externen Verarbeitungsgerät, das von dem Aufnahmegerät unterschiedlich ist, ausgeführt wird;
**dass** der Schritt des Änderns der relativen Beleuchtung die Merkmale eines Optiksystems berücksichtigt, das chromatische Längsaberrationen aufweist, die die relative Beleuchtung in Abhängigkeit von der Lichtquelle variieren lassen,
und wobei der Schritt, der daraus besteht, die Lichtquelle der Szene zu bestimmen, unter Nutzen eines Resultats eines Weißabgleich-Schätzungsalgorithmus ausgeführt wird.

2. Verfahren nach dem vorstehenden Anspruch, wobei der Schritt des Änderns die folgenden Schritte umfasst, die bestehen aus:
- Berechnen und/oder Auswählen der Änderungsparameter ausgehend von der Lichtquelle und allen oder einem Teil der vorbestimmten Änderungsparameter, und
- Ändern auf dem zu verarbeitenden digitalen Bild einer relativen farbigen Beleuchtung in Abhängigkeit von den derart berechneten und/oder ausgewählten Änderungsparametern.

3. Verfahren nach einem der vorstehenden Ansprüche, wobei das Bestimmen der Lichtquelle von einer Benutzerauswahl abhängt.

4. Verfahren nach einem der vorstehenden Ansprüche, wobei das Bestimmen der Lichtquelle von der Aktivierung eines Blitzlichts abhängt.

5. Verfahren nach dem vorstehenden Anspruch, wobei der Schritt, der daraus besteht, die relative Beleuchtung zu ändern, insbesondere den Vorgang umfasst, der daraus besteht, einen Messunterschied der relativen Beleuchtung in dem zu verarbeitenden Bild zu verringern und/oder zu annullieren und/oder unter einen ersten Schwellenwert zu bringen.

6. Verfahren nach einem der vorstehenden Ansprüche, gemäß dem der Schritt, der daraus besteht, die relative Beleuchtung zu ändern, insbesondere den Vorgang umfasst, der daraus besteht, eine Messung der relativen Beleuchtung in dem zu verarbeitenden Bild zu verringern und/oder zu annullieren und/oder für jeden Farbkanal unter einen zweiten Schwellenwert zu bringen.

7. Verfahren nach einem der vorstehenden Ansprüche, wobei das Ändern der relativen Beleuchtung daraus besteht, eine Verstärkung pro Pixel auf mindestens einen der Farbkanäle anzuwenden.

8. Verfahren nach mindestens einem der vorstehenden Ansprüche und nach Anspruch 2, gemäß dem das Ändern der relativen Beleuchtung von mindestens einem variablen Parameter des Aufnahmegeräts abhängt, wobei der variable Parameter insbesondere entweder eine Brennweite oder eine Fokusentfernung und/oder die geschätzte Entfernung der abgebildeten Szene oder eine Belichtungszeit oder eine Verstärkung oder eine Empfindlichkeit oder ein Belichtungsniveau oder eine Apertur, die das Aufnahmegerät verwendet, um das zu verarbeitende digitale Bild aufzunehmen, ist.

9. Verfahren nach mindestens einem der vorstehenden Ansprüche, wobei mindestens einer der Schritte des Bestimmens der Lichtquelle oder des Änderns der relativen Beleuchtungserscheinung in dem Aufnahmegerät ausgeführt wird.

10. Verfahren nach einem der vorstehenden Ansprüche, wobei der Schritt des Änderns der relativen Beleuchtung die Merkmale eines oder mehrerer Filter, die in dem Optiksystem enthalten sind, und/oder des Sensors, der die relative Beleuchtung in Abhängigkeit von der Lichtquelle variieren lässt, berücksichtigt.

11. Verarbeitungssystem digitaler Bilder zum Verarbeiten eines digitalen Bilds, das eine Szene darstellt, das mittels eines Geräts zur digitalen Aufnahme aufgenommen wird, das insbesondere einen Sensor und ein Optiksystem umfasst, wobei das zu verarbeitende digitale Bild die Überlagerung mehrerer Farbkanäle ist, wobei das System geeignet ist, das Verfahren nach mindestens einem der vorstehenden Ansprüche umzusetzen, wobei das System Mittel zum Bestimmen der Lichtquelle der auf dem aufgenommenen zu verarbeitenden digitalen Bild dargestellten Szene; Mittel zum Ändern auf dem zu verarbeitenden digitalen Bild einer relativen farbigen Beleuchtung in Abhängigkeit von der Lichtquelle umfasst.

12. System nach dem vorstehenden Anspruch, **dadurch gekennzeichnet, dass** es in das Aufnahmegerät integriert ist.

## Claims

1. Method of processing a digital image to be processed representative of a scene, the digital image to be processed being acquired by means of a digital capture device comprising a sensor and an optical system, the digital image to be processed being the superposition of several colour channels, comprising the following steps:
- predetermining according to the asymmetries of the physical constitution of the sensor, for a predetermined number of typical illuminants, parameters for modifying the coloured relative illumination in a way that depends on the position of the pixels inside the image;
- determining the illuminant of the scene represented on the acquired digital image to be processed;
- modifying, on the digital image to be processed, by means of modification parameters, in a way that depends on the position of the pixels inside the image, a coloured relative illumination according to the illuminant;
the method being **characterised**
**in that** the determining of the illuminant of the scene represented on the acquired digital image to be processed uses a piece of information from the illuminant of the scene on one or several digital images acquired before the digital image to be processed;
**in that** at least one of the steps of determining the illuminant, or of modifying the relative illumination phenomenon is carried out in an external processing device different from the capture device;
**in that** the step of modifying the relative illumination takes account of the characteristics of an optical system having longitudinal chromatic aberrations that vary the relative illumination according to the illuminant,
and wherein the step consisting in determining the illuminant of the scene is carried out by using a result of an algorithm for estimating the white balance.

2. Method according to the preceding claim wherein the step of modification comprises the following steps, consisting in:
- calculating and/or selecting modification parameters using the illuminant and all or a portion of the predetermined modification parameters, and
- modifying, on the digital image to be processed, a coloured relative illumination according to the modification parameters thus calculated and/or selected.

3. Method according to one of the preceding claims, wherein the determining of the illuminant depends on a user choice.

4. Method according to one of the preceding claims, wherein the determining of the illuminant depends on the activation of a flash.

5. Method according to the preceding claim wherein the step consisting in modifying the relative illumination comprises in particular the operation consisting in reducing and/or cancelling and/or bringing below a first threshold value a difference in the measurement of the relative illumination in the image to be processed.

6. Method according to one of the preceding claims, according to which the step consisting in modifying the relative illumination comprises in particular the operation consisting in reducing and/or cancelling and/or bringing, for each colour channel, below a second threshold value a measurement of the relative illumination in the image to be treated.

7. Method according to one of the preceding claims wherein the modification of the relative illumination consists in applying a gain per pixel to at least one of the colour channels.

8. Method according to at least one of the preceding claims and according to claim 2, according to which the modification of the relative illumination depends on at least one variable parameter of the capture device, the variable parameter being in particular either a focal distance, or a focus distance and/or the estimated distance from the imaged scene, or an exposure time, or a gain, or a sensitivity, or a level of exposure, or an opening used by the capture device in order to acquire the digital image to be processed.

9. Method according to at least one of the preceding claims wherein at least one of the steps of determining the illuminant, or of modifying the relative illumination phenomenon, is carried out in the capture device.

10. Method according to one of the preceding claims, wherein the step of modifying the relative illumination takes account of the characteristics of one or several filters included in the optical system and/or the sensor varying the relative illumination according to the illuminant.

11. System for processing digital images, for processing a digital image representative of a scene, acquired by means of a digital capture device comprising in particular a sensor and an optical system, the digital image to be processed being the superposition of several colour channels, said system being able to implement the method according to at least one of the preceding claims, said system comprising means for determining the illuminant of the scene represented on the acquired digital image to be processed; means for modifying, on the digital image to be processed, a coloured relative illumination according to the illuminant.

12. System according to the preceding claim **characterised in that** it is integrated into the capture device.
